(19) Europäisches Patentamt
European Patent Office
Office européen des brevets

(11) **EP 2 175 386 B1**

(12) **EUROPÄISCHE PATENTSCHRIFT**

(45) Veröffentlichungstag und Bekanntmachung des Hinweises auf die Patenterteilung:
**10.12.2014 Patentblatt 2014/50**

(51) Int Cl.:
***G06F 17/50*** *(2006.01)*

(21) Anmeldenummer: **08017920.3**

(22) Anmeldetag: **13.10.2008**

(54) **Verfahren und Vorrichtung zur rechnergestützten Herstellung von dreidimensionalen porösen Körpern zur Temperierung von Werkstücken**

Method and device for computer-assisted fabrication of three-dimensional bodies for temperature control workpieces

Procédé et dispositif pour la fabrication assistée par ordinateur d'un corps tridimensionnel pour l'équilibrage de la température de pièces usinées

(84) Benannte Vertragsstaaten:
**DE FR GB**

(43) Veröffentlichungstag der Anmeldung:
**14.04.2010 Patentblatt 2010/15**

(73) Patentinhaber: **FIT Fruth Innovative Technologien GmbH**
**92331 Parsberg (DE)**

(72) Erfinder:
• **Fruth, Carl Johannes**
**92331 Parsberg (DE)**
• **Bonke, Alexander**
**92331 Parsberg (DE)**

(74) Vertreter: **Kramer - Barske - Schmidtchen**
**Landsberger Strasse 300**
**80687 München (DE)**

(56) Entgegenhaltungen:
**DE-A1-102006 056 165**

• **AU K M ET AL: "A scaffolding architecture for conformal cooling design in rapid plastic injection moulding" INTERNATIONAL JOURNAL OF ADVANCED MANUFACTURING TECHNOLOGY SEPTEMBER 2007 SPRINGER LONDON LTD; ASHBOURNE HOUSE GB, Bd. 34, Nr. 5-6, September 2007 (2007-09), Seiten 496-515, XP002526595**
• **WETTERGREEN M A ET AL: "Creation of a unit block library of architectures for use in assembled scaffold engineering" COMPUTER AIDED DESIGN, ELSEVIER PUBLISHERS BV., BARKING, GB, Bd. 37, Nr. 11, 15. September 2005 (2005-09-15), Seiten 1141-1149, XP004941261 ISSN: 0010-4485**

**Beschreibung**

**TECHNISCHES GEBIET**

Die vorliegende Erfindung betrifft ein Verfahren zum Bereitstellen von Schichtdaten zur Herstellung eines dreidimensionalen Körpers, in dem gezielt ein Fluss eines Temperiermediums erzeugbar ist, mittels eines (solid) Freeform Fabrication-Schichtbausystems, das auch FFF-System genannt wird.

Außerdem betrifft die vorliegende Erfindung ein Computerprogramm zur Ausführung des zuvor genannten Verfahrens sowie einen Datenträger mit einem solchen Computerprogramm und ein Computersystem, auf dem ein Computerprogramm gemäß der vorliegenden Erfindung geladen ist.

Schließlich betrifft die vorliegende Erfindung auch eine Freeform Fabrication-Anlage, die entsprechend dem erfindungsgemäßen Verfahren zu betreiben ist.

**HINTERGRUND DER ERFINDUNG**

Die bisher bekannten Systeme zur Herstellung von dreidimensionalen Körpern benötigen grundsätzlich 3D-CAD-Daten aus einem bekannten 3D-CAD-Programm. Entweder wird bei einem derartigen bekannten System die gesamte Struktur, als nicht nur der Umriss sondern auch das Körperinnere, in einem 3D-CAD-System dreidimensional konstruiert. Entsprechend können dann die Höhenschnitte, die die notwendigen Daten für die Herstellung eines 3D-Körpers mittels einer Freeform Fabrication-Anlage liefern, durchgeführt werden. Alternativ wird in manchen Freeform Fabrication-Anlagen während der Herstellung, also im Laufe des Durchführens der Belichtung oder dergleichen, pro Schicht die Berechnung einer Füllstruktur durchgeführt, die aber lediglich eine flächige Struktur in der jeweiligen Schichtebene festlegt. Hierdurch wird jedoch keine freie räumliche Strukturgestaltung ermöglicht.

In der DE 10 2006 056 165 A1 wird ein Verfahren und eine Vorrichtung erläutert, mit deren Hilfe erstmals komplexe Strukturen im Körperinneren eines dreidimensionalen Körpers mittels bekannter Schichtbauverfahren (FreeForm Fabrication-Verfahren) realisiert werden können, ohne die bisher üblichen CAD-System mit deren Beschränkungen verwenden zu müssen. Diese Verfahren und Vorrichtungen erlauben erstmals die Herstellung von Anwender spezifischen, sehr komplexen räumlichen Strukturen in bekannten Schichtbauverfahren, ohne dass aufwändigst ein entsprechendes 3D-CAD-Modell erstellt und geschnitten werden muss.

Allgemein werden heutzutage Werkzeuge und Bauteile durch gasförmige oder flüssige Temperiermedien, die in Bohrungen und/oder Kanälen strömen, temperiert. Die bekannten Freeform Fabrication-Technologien ermöglichen die Herstellung von Bauteilen mit komplexen Kanälen und Bohrungen. Jedoch müssen bisher teilweise sehr aufwendig diese Kanäle und Bohrungen in die Bauteile bzw. Werkzeuge einkonstruiert werden. Zwar wurde bereits unter Anwendung der Technologie gemäß der DE 10 2006 056 165 A1 der Aufwand zur Erstellung derartiger Strukturen reduziert, jedoch besteht weiterhin das Problem, dass derartige allgemeine Strukturen keine definierte Flussrichtung eines Temperiermediums aufweisen, so dass beispielsweise sogenannte "tote Ecken" entstehen, also Bereiche, in denen kein Fluss und somit kein Wärmeübergang stattfindet.

In dem Artikel "A scaffolding architecture for conformal cooling design in rapid plastic injection molding", International Journal of Advanced Manufacturing Technology, September 2007, Springer, London Ltd., ist u.a. ein poröser Gerüstaufbau für ein Spritzgussverfahren offenbart. Die poröse Struktur wird aus ursprünglich soliden Elementen, denen Elementteile weggenommen werden, zusammengesetzt. Die poröse Struktur erlaubt zwar grundsätzlich einen Durchfluss eines Temperiermediums in dem herzustellenden Bauteil, allerdings wird keine gezielte Variation der Porositäten zur Festlegung von definierten Durchflusswegen eines Temperiermediums gelehrt. Es wird einzig und alleine ein poröses Bauteil offenbart, dass es auch erlaubt, ein Kühlmittel durchzulassen.

Das der Erfindung zugrunde liegende technische Problem besteht darin, eine Verfahrensweise und Vorrichtung bereitzustellen, mit denen erstmals unter Verwendung bekannter Freeform Fabrication-Verfahrensweisen dreidimensionale Körper hergestellt werden können, in denen gezielt ein Fluss eines Temperiermediums erzeugbar ist.

**DARSTELLUNG DER ERFINDUNG**

Dieses technische Problem wird gemäß einem ersten Aspekt der vorliegenden Erfindung durch ein Verfahren zum Bereitstellen von Schichtdaten zur Herstellung eines dreidimensionalen Körpers gelöst, in dem gezielt ein Fluss eines Temperaturmediums erzeugbar ist, wobei das Verfahren in einer beliebigen, an sich bekannten Freeform Fabrication-Anlage ausgeführt werden kann. Gemäß dem erfindungsgemäßen Verfahren wird Computer gestützt eine erste Körperzelle mit einer ersten Porosität und damit einer ersten definierten Durchlässigkeit für das vorgesehene Temperiermedium festgelegt und $n_1$-fach kopiert, um einen aus mehreren ersten Körperzellen bestehenden ersten Körperbereich zu schaffen, wobei $n_1 \in N$. Außerdem wird Computer gestützt mindestens eine zweite Körperzelle mit einer zweiten Porosität und somit einer von der ersten Durchlässigkeit verschiedenen zweiten Durchlässigkeit für das vorgesehene Temperaturmedium festgelegt und $n_2$-fach kopiert, um mindestens einen aus mehreren zweiten Körperzellen bestehenden weiteren Körperbereich zu schaffen, wobei $n_2 \in N$. Sobald der erste und mindestens eine weitere Körperbereich festgelegt sind, werden diese Computer gestützt aneinandergefügt, um die zu Erzielung des herzustellenden dreidimensionalen Körpers geeignete Gruppierung zu erzielen, in der dann durch die verschiedenen Porositäten und damit verschiedenen Durchlässigkeiten der Körperbereiche der gewünschte Fließweg des Temperiermediums in den dreidimensionalen Körper gebildet ist. Wenn durch die Anzahl und Gruppierung der verschiedenen Körperzellen der vollständige 3D-Körper Computer gestützt geformt ist, d.h. die entsprechenden CAD-Daten oder allgemein Geometriedaten feststehen, werden die Schichtdaten dieses neu erstellten dimensionalen Körpers ermittelt. Anhand der Schichtdaten kann dann in dem geeigneten Freeform Fabrication-Verfahren die Erzeugung des dreidimensionalen Körpers mit dem gewünschten Fluss für das Temperiermedium erfolgen.

Bei dem erfindungsgemäß herzustellenden 3D-Körper kann es sich beispielsweise um ein beliebiges Bauteil oder Produkt handeln, insbesondere können hierdurch auch erstmals an den Anwendungszweck optimal angepasste, temperierte Werkzeuge hergestellt werden. Körperzellen können beispielsweise eine Größe im Bereich von 0,1 mm bis 100 mm haben, insbesondere sind Außenmaße einer Körperzelle von 0,5 mm bis 10 mm geeignet. Eine Körperzelle ist beispielsweise durch 8 Eckpunkte eines Würfels definiert. Selbstverständlich können die Eckpunkte aber auch einen Quader definieren. Auch andere Körperzellformen wie z.B. Tetraeder, Oktaeder etc. oder sogar Kugel oder Ellipsoide etc. sind in dem vorliegenden Verfahren einsetzbar.

Vorzugsweise erfolgt das Erstellen der Schichtdaten unter Heranziehung der Technologie, wie sie aus z.B. aus der DE 10 2006 056 165 A1 bekannt ist. Grundsätzlich wird dazu vorzugsweise eine repräsentative Körperzelle, beispielsweise eine erste und/oder eine zweite Körperzelle, entsprechend der gewünschten Anzahl von Schichten, die durch die Zelle hindurchgehen, geteilt, und die entsprechenden Schichtdaten für diese erste und/oder zweite Körperzelle ermittelt. Diese derart ermittelten Schichtdaten werden dann in geeigneter Weise auf die weiteren, mit der repräsentativen Körperzelle identischen weiteren Körperzellen, die in ihrer Gesamtheit den dreidimensionalen Körper bilden, übertragen bzw. kopiert. Dadurch ist das Erstellen der Schichtdaten des gesamten 3D Körpers mit den darin gewünschten spezifischen Flusswegen für das Temperiermedium ohne großen und aufwändigen Rechnereinsatz ermittelbar.

Gemäß einer beispielhaften weiteren Ausführungsform der vorliegenden Erfindung wird computergestützt eine $n_3$ -te Körperzelle festgelegt, die eine $n_3$ -te Durchlässigkeit für das vorgesehene Temperiermedium aufweist. Die $n_3$ -te Durchlässigkeit ist dabei für das Temperiermedium von der ersten und zweiten Durchlässigkeit verschieden. Die $n_3$ -te Körperzelle wird dann $n$ -fach kopiert, um einen aus mehreren $n_3$ -ten Körperzellen bestehenden $n_3$ -ten Körperbereich, der eine $n_3$ -te Durchlässigkeit aufweist, zu schaffen. Entsprechend werden bei dieser Ausführungsform mindestens ein erster Körperbereich, mindestens ein zweiter Körperbereich und mindestens ein $n$ -te Körperbereich zu dem herzustellenden dreidimensionalen Körper aneinander gefügt. $n$ ist dabei $n \in N$ und $n_3 \in N_{ohne1,2}$. Entsprechend dieser beispielhaften Ausführungsform der vorliegenden Erfindung werden also erste, zweite und dritte usw. Körperzellen und durch Kopiervorgänge entsprechende Körperbereiche erstellt, die unterschiedliche Durchlässigkeiten für das vorgesehene Temperiermedium aufweisen. Durch das Aneinanderfügen der ersten, zweiten, dritten usw. Körperbereiche in der gewünschten Anzahl und Gruppierung folgt dann die gewünschte Vorgabe für den Flussweg eines Temperiermediums in dem gewünschten 3 D-Körper.

Es ist somit in einfacher Weise möglich, verschiedene Körperbereiche des zu erstellenden 3D-Körpers mit den gewünschten Eigenschaften für den Fließweg des Temperiermediums zu schaffen. Auch das Generieren der Schichtdaten ist dann in einfacher Weise möglich, da nicht der gesamte hergestellte 3D-Körper geschnitten wird, sondern vorzugsweise nur eine den jeweiligen Körperbereich repräsentierende einzelne Körperzelle.

Eine weitere beispielhaften Ausführungsform des erfindungsgemäßen Verfahrens sieht vor, dass die erste Körperzelle so festgelegt wird, dass sie eine erste Porosität aufweist. Die erste Porosität ist dabei derart angepasst. dass die erste poröse Körperzelle die erste Durchlässigkeit für das vorgesehene Temperiermedium hat. Zudem wird die zweite Körperzelle optional so festgelegt, dass sie eine zweite Porosität aufweist, wobei die zweite Porosität so angepasst ist, dass die zweite poröse Körperzelle eine von der ersten Durchlässigkeit verschiedene zweite Durchlässigkeit für das vorgesehene Temperiermedium aufweist. Es ist somit sehr leicht möglich, poröse Körperbereiche zu bilden, die aus einer oder mehreren identischen Körperzellen bestehen. Durch die verschiedenen Porositäten wird der Fließweg des Mediums in dem herzustellenden 3D-Körper, der aus der Gesamtheit der herzustellenden Körperzellen besteht, festzulegen.

Gemäß einer weiteren beispielhaften Ausführungsform des erfindungsgemäßen Verfahrens ist es vorgesehen, dass Computer gestützt mindestens eine Hüllzelle so festgelegt wird, dass diese für das vorgesehene Temperiermedium undurchlässig ist. Es erfolgt dann optional ein $n_4$ - faches Kopieren des festgelegten Hüllzelle, um einen $n_4$ -fachen Hüllkörperbereich. Hierbei ist $n_4 \in N$. Des Weiteren folgt bei dieser weiteren erfindungsgemäßen Verfahrensweise ein Aneinanderfügen aller festgelegten Körperzellen und der mindestens einen Hüllzelle in der zur Erzielung des herzustellenden dreidimensionalen Körpers geeigneten Gruppierung, die dann den gewünschten Fließweg des Temperiermediums in dem dreidimensionalen Körper bildet. Grundsätzlich ist anzumerken, dass eine Hüllzelle auch gebildet werden kann, wenn eine der Körperzellen die Durchlässigkeit Null hat. Normalerweise wird aber die Durchlässigkeit größer Null sein.

Gemäß einer weiteren beispielhaften Ausführungsform des erfindungsgemäßen Verfahrens erfolgt die Festlegung der Porosität einer Körperzelle durch mindestens eines der folgenden Gestaltungsmerkmale: Anzahl von soliden Raumelementen, Form von soliden Raumelementen, Ausrichtung von soliden Raumelementen und Material von soliden Raumelementen. Beispielsweise kann ein solides Raumelement im Sinne der vorliegenden Erfindung ein längliches Stabelement, ein Kugelelement, ein Würfelelement oder beliebiges 3D-Element mit beliebiger Kontur sein. Geeignete Abmessungen wie Länge und/oder Durchmesser eines Raumelementes können beispielsweise sein: ca. 0,05 mm bis 100 mm oder mehr, insbesondere 0,1 mm bis 10 mm oder mehr.

Diese vorgefertigten Elemente können in einer Bibliothek oder Datenbank abgespeichert sein, die dann zur Festlegung der Porosität einer Körperzelle in der gewünschten Anzahl und Form eingesetzt werden und, falls erforderlich, vervielfacht werden. Dadurch kann definiert die Durchlässigkeit einer Körperzelle in gewünschter Richtung und Weise festgelegt sein.

Gemäß einem weiteren Aspekt der vorliegenden Erfindung wird ein Computerprogramm zur Ausführung eines Verfahrens, wie es zuvor erläutert wurde, bereitgestellt. Ein solches Computerprogramm kann beispielsweise auf einem an sich bekannten Datenträger abgelegt sein, wie beispielsweise eine CD, ein nichtflüchtiger oder flüchtiger Speicher, oder ähnliches.

Ein weiterer Aspekt der vorliegenden Erfindung betrifft ein Computersystem, auf dem ein Computerprogramm zur Ausführung eines Verfahrens, wie es zuvor erläutert wurde, geladen ist. Dadurch ist die Durchführung des Verfahrens rechnergestützt ermöglicht, beispielsweise durch Interaktion mit einem Benutzer des Verfahrens bzw. Computersystems.

Schließlich betrifft ein weiterer Aspekt der vorliegenden Erfindung eine Freeform Fabrication-Anlage, die ein Computersystem umfasst, auf dem ein zur Ausführung des Verfahrens bestimmtes Computerprogramm, wie es zuvor erläutert wurde, geladen ist. Außerdem umfasst diese Anlage eine grundsätzlich an sich bekannte Fertigungsmaschine, die dazu ausgebildet ist, ein Freeform Fabrication-Verfahren durchzuführen. Die Fertigungsmaschine ist außerdem mit dem Computersystem verbunden und durch das Computersystem werden die zur Erstellung des 3D Körpers notwendigen Schichtdaten übermittelt. Auch die Gesamt- oder Teilsteuerung der Fertigungsmaschine mit dem Computersystem kann vorgesehen sein.

Beispielsweise handelt es sich bei dieser Fertigungsmaschine um eine übliche Freeform Fabrication-Maschine, wie sie von verschiedenen Herstellern angeboten werden. Bei Freeform Fabrication-Verfahren der hier angesprochenen Art kann es sich beispielsweise um bekannte Verfahren handeln, bei denen die einzelnen Schichten aus einem Pulver oder pulverähnlichen Materialien gefertigt werden. Insbesondere werden metallische Bauteile über die Schmelzphase durch das sogenannte Lasersintern oder Elektronenstrahlschmelzen erzeugt. Auch das sogenannte selektive Lasersintern (SLS-Verfahren) arbeitet nach diesem Prinzip. Beim selektiven Mask-Sintern (SMS-Verfahren) wird anstelle eines Laserstrahls eine breitflächige Strahlungsquelle wie z.B. ein Array aus Infrarotstrahlern zum Erhärten bzw. Verfestigen definierter Schichtbereiche eingesetzt. Über eine für jede Schicht neu zu generierende Maske erfolgt die Festlegung, welche Bereiche einer Schicht zu erhärten bzw. zu verfestigen sind. Alle diese Verfahren basieren darauf, dass zuerst eine Schicht aus losem, d.h. unverfestigtem Beschichtungsmaterial aufgebracht wird, die eine genau definierte Schichtdicke und Formoberfläche (normalerweise eine plane Oberfläche) hat. Die für die vorliegende Erfindung zum Einsatz kommenden Schichtaufbauverfahren können beispielsweise folgende Verfahren sein: 3DP der Firma Zcorp, PLT der Firma Kira, Polyjet der Firma Objet, SMS der Firma Sintermask, SLS sowie DMLS der Firmen EOS, SLA sowie IMLS der Firma 3D Systems, Lasercusing der Firma Konzeptlaser, Laserschmelzen der Firma MCP, Electron Beam Melting der Firma Arcam und Electron Beam Sintering sein. Entsprechend können erfindungsgemäß beispielsweise Metalle, Kunststoffe oder Keramiken zur Herstellung eines 3D-Körpers zum Einsatz kommen.

Der guten Ordnung halber ist anzumerken, dass im vorliegenden Fall die Porosität das Verhältnis von Hohlraumvolumen zu Gesamtvolumen einer Körperzelle darstellt. Sie dient hier als klassifizierendes Maß für die tatsächlich vorliegenden Hohlräume in einer definierten Körperzelle.

Der Begriff Durchlässigkeit oder Permeabilität ist aus dem Darcyschen Gesetz abgeleitet und definiert als:

$$K = \frac{Q \cdot \eta \cdot l}{\Delta p \cdot A}$$

Hierbei bedeuten:

K = Permeabilität in m$^2$,
Q = Fließrate in m$^3$/sec,
$\eta$ = Dynamische Viskosität des Fließmediums (hier Temperiermediums) in Ns/m$^2$,
l = durchströmte Länge des porösen Körpers in m,
$\Delta$p = Druckdifferenz in N/m$^2$, die sich nach dem Strömen einstellt
A = durchströmte Querschnittsfläche des porösen Körpers in m$^2$.

Abschließend ist festzustellen, dass mit " N "die Menge der natürlichen Zahlen gemeint is. Aus technischen Gründen ersetzt das Symbol "N" das ansonsten

hinlänglich bekannte Symbol $\mathbb{N}$ oder $\mathbb{N}$.

## KURZE BESCHREIBUNG DER ZEICHNUNGEN

Im Folgenden sind zur weiteren Erläuterung und besserem Verständnis mehrere Ausführungsbeispiele der vorliegenden Erfindung unter Bezugnahme auf die beigefügten Zeichnungen näher beschrieben. Es zeigt:

Fig. 1     eine schematische Darstellung einer Free-Form Fabrication-Anlage, das ein Computersystem und eine hiermit verbundene Free-Form Fabrication-Maschine umfasst und die Herstellung dreidimensionaler Körper mit komplizierter Raumstruktur gemäß der vorliegenden Erfindung ermöglicht,

Fig. 2     eine schematische Perspektivansicht eines herzustellenden dreidimensionalen Körpers in einem Koordinatensystem, wobei hier die für die Herstellung in Schichtbauweise erforderlichen einzelnen Höhenschnitte bzw. -schichten angedeutet sind,

Fig. 3     eine schematische Schnittansicht eines dreidimensionalen Körpers mit einem ersten Körperbereich und einem innenliegenden zweiten Körperbereich,

Fig. 4     eine schematische Schnittansicht eines weiteren dreidimensionalen Körpers mit mehreren verschiedenen Körperbereichen unterschiedlicher Durchlässigkeit,

Fig. 5     eine weitere schematische Schnittansicht eines erfindungsgemäß herzustellenden dreidimensionalen Körpers mit mehreren verschiedenen Körperbereichen unterschiedlicher Durchlässigkeit,

Fig. 6     eine schematische Schnittansicht eines weiteren erfindungsgemäß herzustellenden dreidimensionalen Körpers mit verschiedenen Körperbereichen unterschiedlicher Durchlässigkeit,

Fig. 7     eine schematische Schnittansicht eines weiteren erfindungsgemäß herzustellenden dreidimensionalen Körpers mit einer Vielzahl von verschiedenen Körperbereichen unterschiedlicher Durchlässigkeit,

Fig. 8     eine schematische Darstellung verschiedener Körperzellen, die mehrere längliche Raumelementen, hier Stabelemente, enthalten und

die zur Erzeugung verschiedener Körperbereiche eines herzustellenden 3D-Körpers dienen,

Fig. 9     eine schematische Perspektivansicht eines Teils eines erfindungsgemäß herzustellenden dreidimensionalen Körpers mit verschiedenen Körperbereichen unterschiedlicher Porosität bzw. Durchlässigkeit,

Fig. 10     eine horizontale Schnittansicht durch den in Fig. 9 gezeigten Körper sowie eine Vergrößerung eines Teils dieser Schnittansicht,

Fig. 11     eine schematische Perspektivansicht eines weiteren beispielhaften dreidimensionalen Körpers, der gemäß der vorliegenden Erfindung herzustellen ist und unterschiedliche Porositäten aufweist, sowie eine Teilvergrößerung dieser Perspektivansicht,

Fig. 12     eine horizontale Schnittansicht durch den Körper in Fig. 11 und eine Detailvergrößerung dieser Schnittansicht,

Fig. 13     verschiedene beispielhafte Körperbereiche eines herzustellenden Körpers,

Fig. 14     ein Teil eines dreidimensionalen Körpers mit definierter Führung für ein Temperiermedium,

Fig. 15     eine Draufsicht auf einen dreidimensionalen Körper, der gemäß der Fig. 14 aufgebaut ist,

Fig. 16     eine Vergrößerung eines Teils der Draufsicht der Fig. 15,

Fig. 17     eine schematische Darstellung des Temperaturverlaufs des Temperiermediums in dem in den Fig. 14-16 dargestellten dreidimensionalen Körper, und

Fig. 18     weitere perspektivische Ansichten eines Teils eines weiteren dreidimensionalen Körpers, der entsprechend dem erfindungsgemäßen Verfahren herzustellen ist und verschiedene Körperbereiche umfasst, die zur definierten Steuerung und Führung eines Temperiermediums dienen.

## DETAILLIERTE BESCHREIBUNG DER BEISPIELHAFTEN AUSFÜHRUNGSFORMEN DER VORLIEGNEDEN ERFINDUNG

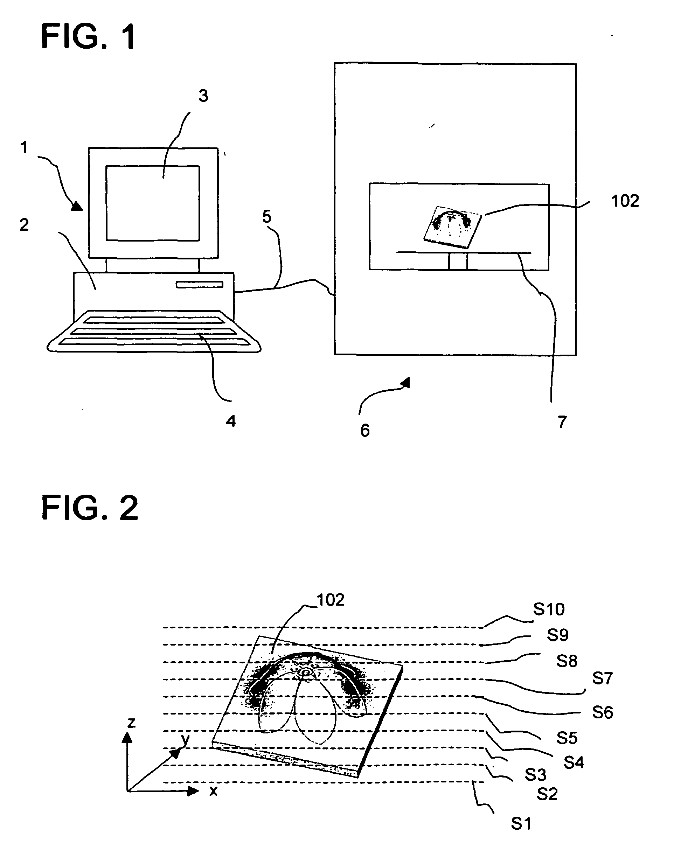

Die Fig. 1 zeigt eine schematische Darstellung eines Computersystems 1, das über eine Leitung 5 mit einer an sich bekannten FreeForm Fabricaton-Maschine 6 verbunden ist. Das Computersystem 1 umfasst hier eine Recheneinheit 2, einen Monitor 3 mit Display und eine Tastatur 4 zur Eingabe von Anweisungen. In der Recheneinheit 2 sind die an sich hinlänglich bekannten Komponenten wie Datenspeicher, CPU etc. vorhanden, um das erfindungsgemäße Verfahren ablaufen zu lassen.

Bei der in der Fig. 1 dargestellten Ansicht ist die FreeForm Fabricaton-Maschine 6 mit einem Tisch 7 ausgestattet, der in der Höhe verfahren wird, um den herzustellenden Körper 102 schichtweise aufzubauen. Im vorliegenden Fall ist ein Wärmeleitkörper 102 in einem Free-Form Fabrication-Verfahren hergestellt worden.

Die Fig. 2 zeigt eine schematische Ansicht des Wärmeleitkörpers 102 in einem kartesischen Koordinatensystem x, y, z. Hier ist äußerst schematisch der herzustellende Körper 102 in einzelne Höhenschnitte bzw. -schichten S1-S10 unterteilt. In der Realität sind natürlich nicht 10 Schichten sondern bei einem solchen Körper wahrscheinlich mehrere Tausend Schichten anzufertigen, um die gewünschte Auflösung zu erzielen. Für jede einzelne Schicht S 1-S 10 werden in der FreeForm Fabrication-Maschine 6 die jeweiligen Schnittdaten benötigt, das heißt die Daten, die angeben, welche Teile eines Polymerflüssigkeitsbades oder eines metallischen Pulvers (oder andere Medien, je nach Art des verwendeten RP-Verfahrens eingesetzt wird, belichtet, verfestigt oder bedruckt werden.

Wie bereits eingangs dargestellt, stammen die für die Herstellung des Wärmeleitkörpers 102 notwendigen Kontur- und Strukturdaten normalerweise von einem 3D-CAD-System. Allerdings ist dabei die Ausbildung äußerst spezieller Raumstrukturen nicht ohne weiteres und nur sehr begrenzt möglich. Die für die Festlegung einzelner Körperzellen notwendigen Daten werden vorzugsweise gemäß dem in DE 10 2006 056 165 A1 beschriebenen Verfahren ermittelt.

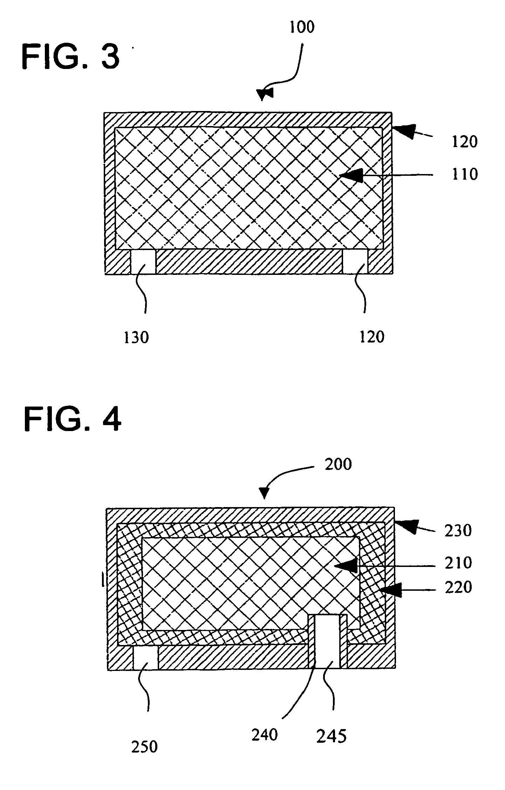

Die Fig. 3 zeigt eine beispielhafte Ausführungsform eines erfindungsgemäß herzustellenden 3D-Körpers 100 in schematisch dargestellter Schnittansicht, wie er Rechner bzw. Computer gestützt erstellt worden ist. Der hier gezeigte 3D-Körper 100 umfasst ein Hüllteil 120, das für ein bestimmtes Temperiermedium wie z.B. ein eine bestimmte Temperatur aufweisendes Gas oder Flüssigkeit undurchlässig ist. Innerhalb des beispielsweise quaderförmig ausgebildeten 3D-Körpers 100 ist ein Körperbereich 110 angeordnet, der eine definierte erste Durchlässigkeit aufweist. Durch eine Eintrittsöffnung 120 und eine Austrittsöffnung 130, die sich in einer Außenwand des Hüllteils 120 befinden, ist ein Temperiermedium ein- bzw. ausführbar. Da das Hüllteil 120 eine Durchlässigkeit von 0 hat (also für das Temperiermedium undurchlässig ist) und das Innere 110 eine Durchlässigkeit >0 hat, wird ein Temperiermedium, das durch die Öffnung 120 in den Körper 100 eingebracht wird, sich im gesamten Körper 110 verteilen und zu gegebener Zeit ab einem gewissem Füllstand des Temperiermediums in dem Inneren 110 durch die Öffnung 130 austreten. Die Führung des Temperiermediums in diesen Körper 110 ist hier allerdings noch optimierbar.

So ist in der Fig. 4 eine entsprechend der Fig. 3 gezeigte Schnittansicht schematisch dargestellt, der hier gezeigte 3D-Körper 200 weist aber mehrere unterschiedliche Durchlässigkeiten aufweisende Körperbereiche 210, 220, 230 auf. Der Körperbereich 230 ist als Hüllteil ausgebildet, der für das Temperiermedium undurchlässig ist. Die beiden Körperbereiche 210, 220 weisen unterschiedliche Porositäten und damit unterschiedliche Durchlässigkeiten auf. In dem nun ein Rohr 240 mit einer Eingangsöffnung 245 von der Außenseite des Hüllteils 230 bis in das Innere des Körperbereichs 210 reicht, wird ein Temperiermedium in das Körperinnere 210 eingebracht. Eine Austrittsöffnung 250 reicht jedoch nur durch das Hüllteil 230 bis zu dem zweiten Körperbereich 220. Wenn nun das Temperiermedium durch die Eintrittsöffnung 250 eingebracht wird, teilt es sich zuerst in dem Körperbereich 220 bevor es in den Körperbereich 210 einsickert. Von dort wird es dann durch das Rohr 240 abgeführt. Aufgrund der unterschiedlichen Porositäten bzw. Durchlässigkeiten der Körperbereiche 210, 220 erfolgt zielgerichtet zuerst eine Verteilung des Temperiermediums in dem Körperbereich 220, bevor es dann nach Aufnahme beispielsweise einer bestimmten Wärmeenergie in den Körperbereich 210 eintritt und von dort abgeführt wird.

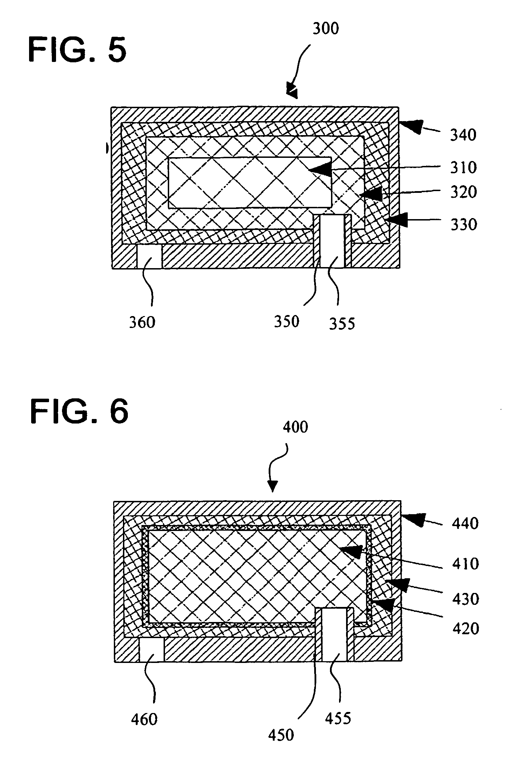

Die Fig. 5 zeigt eine weitere beispielhafte Ausführungsform eines erfindungsgemäß herzustellenden 3D-Körpers 300. Hier ist innerhalb eines Hüllteils 340 ein erster Körperbereich 310 vollständig in einem zweiten Körperbereich 320 eingebettet. Ein dritter Körperbereich 330 umschließt den zweiten Körperbereich 320. Eine Eintrittsöffnung 360 erstreckt sich durch das Hüllteil 340 bis zu dem Körperbereich 330. Ein Ausfiihrrohr 350 erstreckt sich von dem Körperbereich 320 durch den Hüllteil 340 nach außen. Das Rohr 350 hat einen freien Durchgang 355. Die Durchlässigkeiten bzw. Porositäten der Körperbereiche 310, 320, 330 sind unterschiedlich. Beispielsweise ist die Durchlässigkeit für das Temperiermedium in dem Körperbereich 330 höher als in dem Körperbereich 320. Die Durchlässigkeit in dem Körperbereich 310 ist wiederum höher als in dem Körperbereich 320. Entsprechend ist beispielsweise die Porosität in dem Körperbereich 330 höher als in dem Körperbereich 320. Die Porosität des Körperbereichs 320 ist zudem höher als in dem Körperbereich 310.

Aufgrund dieser Verteilung der Porositäten bzw. Durchlässigkeiten in den verschiedenen Körperbereichen 310, 320, 330 wird beim Einbringen eines Temperiermediums durch die Öffnung 360 in den ersten Körperbereich 320 sich das Temperiermedium in dem Körperbereich 330 verteilen bevor es dann gleichmäßig von allen Seiten in den Körperbereich 320 eintritt. Dort verteilt es sich wiederum bis es weiter in den Körperbereich 310 dringt. Dadurch, dass das Abführrohr 350 bis in den Körperbereich 320 reicht, wird zielgerichtet eine Abfuhr des Temperiermediums aus dem Körperbereich 320 erfolgen, und nur ein Teil in den Körperbereich 310 fließen.

Entsprechend kann eine gewünschte Temperaturverteilung in dem Körper 300 erzielt werden.

Eine weitere beispielhafte Ausführungsform eines 3D-Körpers 400 ist in einer schematischen Schnittansicht in Fig. 6 gezeigt. Hier ist ein undurchlässiger Hüllteil 440 mit einem ersten inneren Körperbereich 430 versehen, in dem wiederum ein Wandungsbereich 420 ausgebildet ist. Darin befindet sich einer weiterer Körperbereich 410. Eine Eintrittsöffnung 460 reicht durch das Hüllteil bis zu dem ersten Körperbereich 430. Ein Austrittsrohr 450 erstreckt sich von dem inneren Körperbereich 410 durch das Hüllteil 440 nach außen. Eine Austrittsöffnung 455 lässt das Temperiermedium aus dem Hüllteil austreten. Beispielsweise kann die Porosität im Hüllteil 430 geringer sein als im Wandungsbereich 420. Die Porosität im Körperinneren 410 kann wiederum geringer sein als im Wandungsbereich 420 dadurch wird beim Einbringen eines Temperiermediums 460 das Temperiermedium sich erst eher gleichmäßig im Bereich 430 verteilen, bevor es langsam durch den Wandungsbereich 420 mit relativ geringer Durchlässigkeit dann weiter in den Bereich 410 eintritt. Aus dem Bereich 410 wird es leichter durch das Austrittsrohr 450 austreten als zurück in den Bereich 420 bzw. 430. Entsprechend kann wiederum ein gewünschter Fluss des Temperiermediums erzeugt werden.

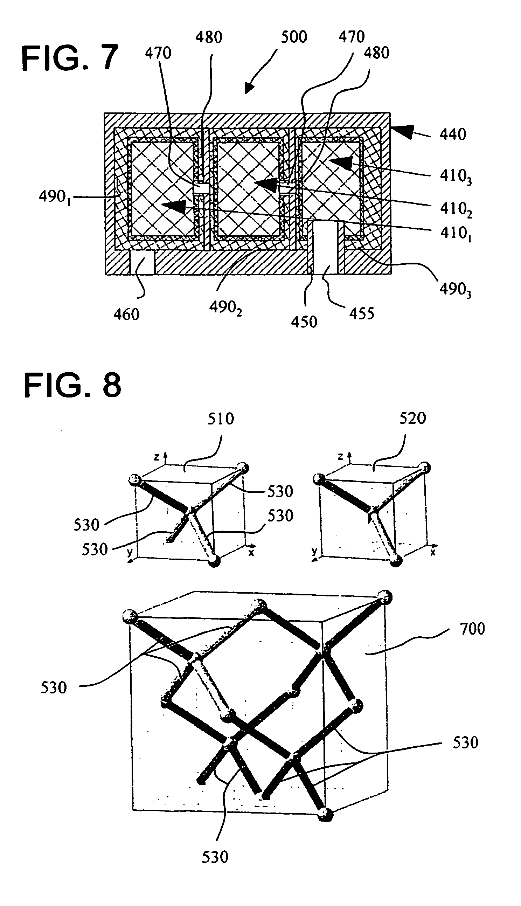

Eine noch kompliziertere Gestaltung eines 3D-Körpers 500 ist in der Fig. 7 in schematischer Schnittansicht gezeigt. Der Aufbau ähnelt der Ausgestaltung gemäß der Fig. 6, jedoch sind drei innere Körperbereiche $410_1$ bis $410_3$ vorhanden, die jeweils von einem Wandungsbereich 420 umgeben sind. Von einem Körperbereich $410_1$ erstreckt sich eine Öffnung bis in das in den Körperbereich $494_2$. Die Körperbereiche $490_1$, $490_2$ und $490_3$ sind durch Wände 485 voneinander getrennt, die beispielsweise undurchlässig sind oder eine geringe Durchlässigkeit aufweisen. Entsprechend wird beim Einbringen eines Temperiermedium 4 durch die Öffnung 460 sich dieses zuerst in dem Bereich $490_1$ verteilen, bevor es dann durch den Wandungsbereich 480 in das Körperinnere $410_1$ eintritt und von dort dann durch die Öffnung 470 in den Körperbereich $490_2$ überströmt. Von dort erfolgt dann der gleiche Vorgang in den Körperbereich $410_2$ und durch die Öffnung 470 weiter in den Körperbereich $490_3$. Schließlich erfolgt dann ein Austritt durch das Austrittsrohr 450 und die zugehörige Austrittsöffnung 455.

Die in den zuvor genannten Figuren gezeigten verschiedenen Ausführungsformen von 3D-Körpern 100, 200, 300, 400, 500 zeigen, dass äußerst unterschiedliche 3D-Körper mit gewünschter Verteilung eines Temperiermediums bzw. gewünschten Vorgaben für die Strömung eines Temperiermediums erzeugbar sind. Hervorzuheben ist, dass durch die erfindungsgemäße Ausgestaltung die Porositäten und Durchlässigkeiten sehr gezielt und fein strukturiert gestaltet werden können.

Beispielsweise kann ein zuvor genannter Körperbereich aus mehreren Zellen 510, 520, wie sie in der Fig. 8 dargestellt sind, erzeugt werden. Eine beispielhafte Körperzelle 510 umfasst hier vier stabförmige Raumelemente 530, die sich von der Mitte der Körperzelle 510 zu deren Eckpunkten erstrecken. Im Gegensatz zu der gezeigten Körperzelle 510 weist die Körperzelle 520 nur drei anstatt vier längliche Stabelemente 530 auf. Durch Vervielfältigung der Zellen 510, 520 oder andersartig ausgefüllter Zellen 510, 520 können gewünschte Porositäten und Durchlässigkeiten in bestimmten Körperbereichen erzeugt werden.

Eine weitere beispielhafte Zelle 700 ist ebenfalls in der Fig. 8 gezeigt. Die hier gezeigte Zelle 700 setzt sich aus mehreren Körperzellen 510 zusammen. Beispielsweise kann dann auch durch die Form und auf das Material der Raumelemente 530 die Porosität der Zelle 510, 520 bzw. 700 geändert werden.

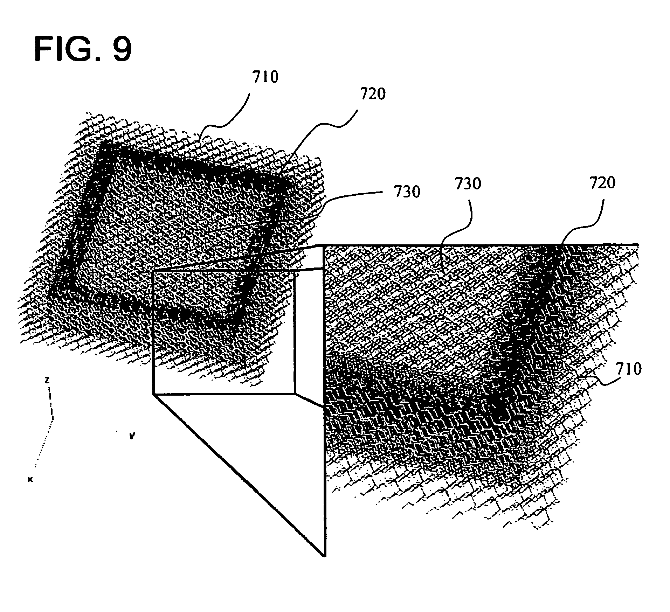

Die Fig. 9 zeigt eine beispielhafte poröse Struktur mit unterschiedlichen Porositäten 710, 720, 730. Die in der Fig. 9 schematisch dargestellte Struktur eines 3D Körpers umfasst einen ersten Körperbereich 710, einen zweiten Körperbereich 720 und einen dritten Körperbereich 730, die aus einer Vielzahl von Zellen, wie beispielsweise Zellen 510, 520 bzw. 700 zusammengesetzt sind. Wie insbesondere aus der Vergrößerung des unteren Eckteils des in der Fig. 9 gezeigten Körpers ersichtlich ist, ist die Porosität des Körperbereichs 710 viel höher als des Körperbereichs 720. Die Porosität des Körperbereichs 730 ist wiederum geringer als die des Körperbereichs 710, jedoch höher als die des Körperbereichs 720. Der hier gezeigte, verschiedener Körperbereiche 710, 720, 730 umfassende 3D-Körper ist somit aus einer Vielzahl von Raumelementen 35 zusammengefügt, die durch die spezielle gewünschte Vervielfältigung verschiedener Zellen 510, 520 die gewünschte Porosität an bestimmten Körperbereichen- bzw. Teilen aufweist.

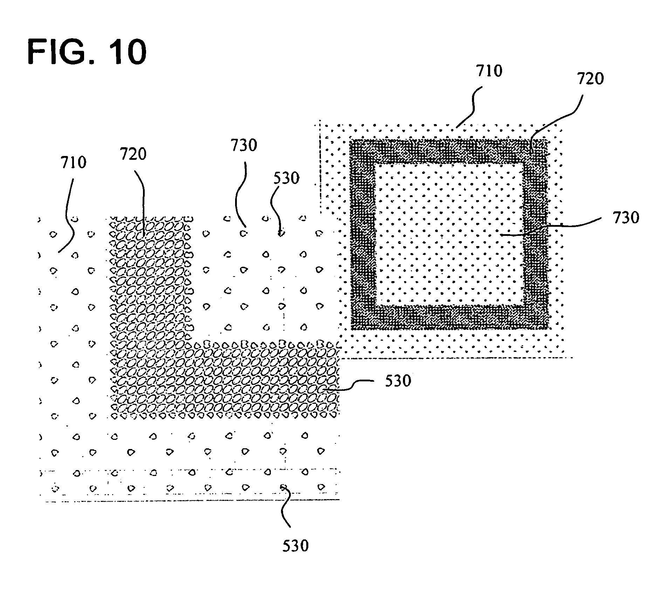

Die Fig. 10 zeigt eine schematische horizontale Schnittansicht durch den Körper wie er in der Fig. 9 gezeigt ist. Hier ist insbesondere nochmals die unterschiedliche Porosität ersichtlich. So sind in dem Körperbereich 710, siehe insbesondere die links gezeigte Vergrößerung des unteren Eckbereichs der Struktur, wie sie in der Fig. 9 bzw. 10 gezeigt sind, die Schnitte durch die Raumelemente 530 ersichtlich. Die Porosität im Körperbereich 720 ist viel geringer als im Körper 710, wie sich aus den Schnitten der Elemente 530 ergibt. Wiederum ist die Porosität im Bereich 730 gleich der des 710 bzw. etwas geringer.

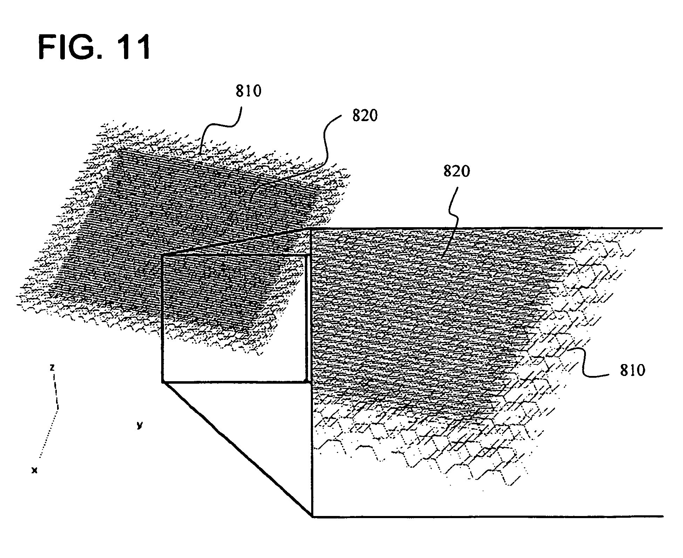

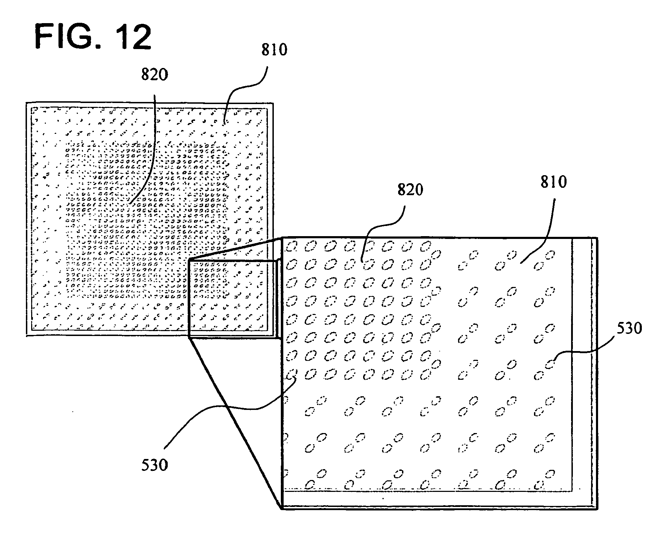

Eine weitere schematische Darstellung eines anderen Strukturgebildes mit verschiedenen porösen Körperbereichen 810, 820 ist in Fig. 11 in perspektivischer Ansicht gezeigt. Wie sich insbesondere aus der Vergrößerung eines Teils dieser Struktur gemäß Fig. 11 zeigt, ist die Porosität im Bereich 810 weitaus größer als im Bereich 820. Dies ergibt sich auch ohne weiteres aus der Schnittansicht gemäß der Fig. 12 und insbesondere der entsprechenden Vergrößerung eines unteren Eckbereichs dieser Struktur. Hier ist wiederum ersichtlich, dass die Dichte der Raumelemente 530 im Bereich 820 höher ist als im Bereich 810. Entsprechend ist auch die Durchlässigkeit für ein Temperiermedium im Bereich 810 höher als im Bereich 820.

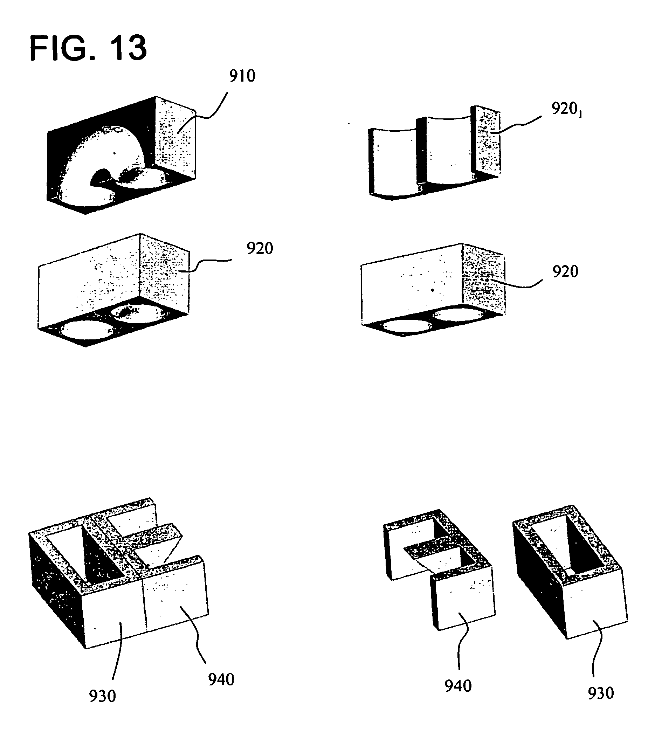

Die Fig. 13 zeigt schematisch verschiedenen beispielhafte Körperbereiche 910, 920, 930, 940 sowie $920_1$. Hier sind durch Raumelemente und unterschiedliche Strukturen und Durchlässigkeiten aufweisende Körperbereiche Führungsabschnitte für einen Gesamtkörper gezeigt. So weisen die Körper 910, 920, 930 offene Innenräume auf, die unmittelbar das Temperiermedium durchleiten können. Entweder sind die umgebenen Körperbereich undurchlässig oder mit einer geringen Porosität ausgebildet.

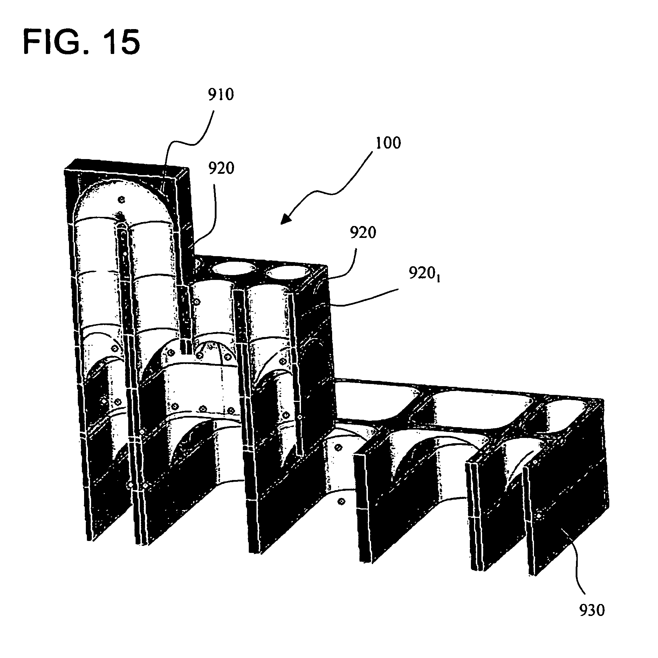

In der Fig. 14 ist wiederum der bereits in der Fig. 1 schematisch dargestellte 3D-Körper 100 gezeigt, der sich aus den verschiedenen Körperbereichen 910, 920 etc. zusammensetzt. Entsprechend können beliebige Gebilde zur gezielten Führung von Medien wie Flüssigkeiten oder gasförmige Temperiermedien zusammengefügt werden. Die Zusammenfügung ist allerdings computergestützt durchführbar, die entsprechenden Schichtdaten des Gesamtkörpers werden dann in einer üblichen Freeform Fabrication-Anlage, wie sie beispielsweise in der Fig. 1 gezeigt ist, ausgeführt.

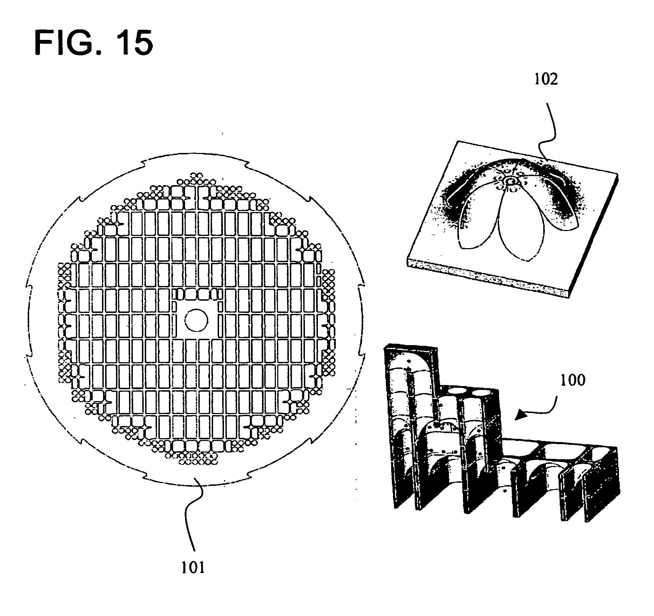

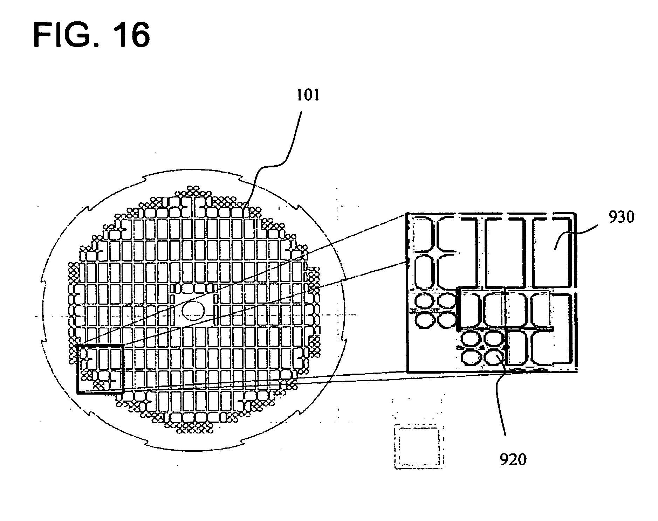

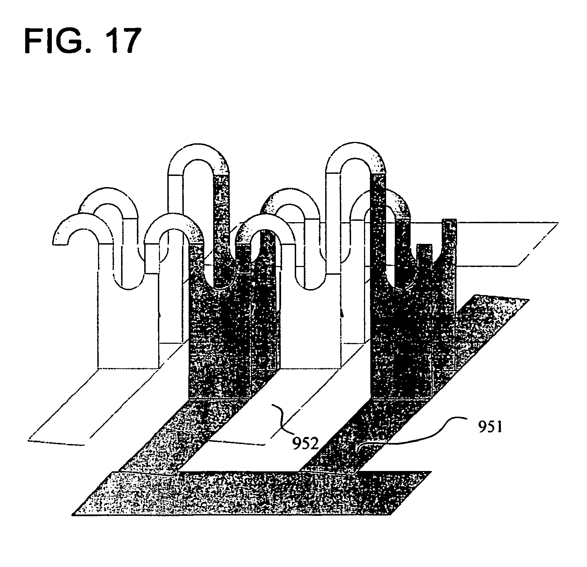

Die Figs. 15 und 16 zeigen schematische Horizontalschnitte eines Gebildes 102, das sich aus verschiedenen Teilen, wie sie in der Fig. 14 gezeigt sind, zusammensetzt. Die Fig. 17 zeigt die schematische Führung eines Temperiermediums in einem Teil, wie es in der Fig. 14 gezeigt ist. Der dunkle Teil zeigt ein warmeinströmendes Temperaturmedium 351, das, bedingt durch die gewählten Porositäten und Durchlässigkeiten, in dem 3D-Körper 100 strömt und dabei Wärme abgibt und als kälterer Strom 352, der hier leicht grau dargestellt ist, abströmt.

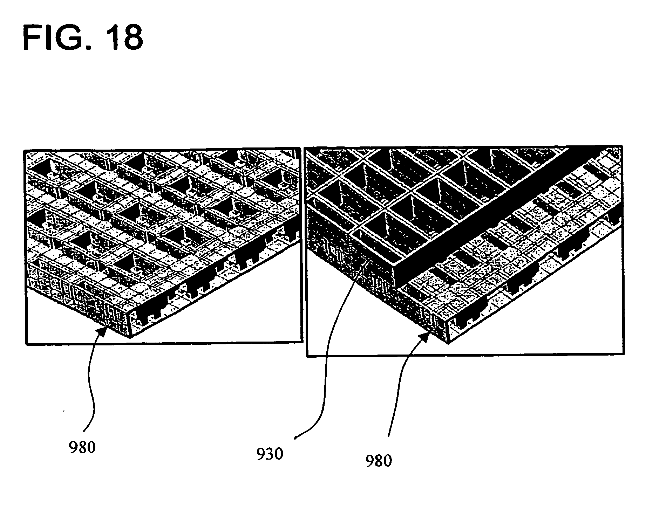

Schließlich zeigt die Fig. 18 eine weitere schematische Perspektivansicht eines 3D-Körpers 980, der sich aus verschiedenen Elementen 930 etc. zusammenfügt und gewünschte spezielle unterschiedliche Durchlässigkeiten und Strömungswege für ein Temperiermedium in einem 3D- Körper 980 aufweist.

**Patentansprüche**

1. Verfahren zum Bereitstellen von Schichtdaten zur Herstellung eines 3-dimensionalen Körpers (100), in dem gezielt ein Fluss eines Temperiermediums erzeugbar ist, mittels eines Freeform Fabrication-Schichtbausystems, wobei das Verfahren mindestens die nachfolgenden computergestützten Verfahrensschritte aufweist:

   - Festlegen einer ersten Körperzelle (510) mit einer ersten Porosität und dadurch einer ersten definierten Durchlässigkeit für das vorgesehene Temperiermedium,
   - $n_1$ -faches Kopieren der festgelegten ersten Körperzelle (510), um einen aus mehreren ersten Körperzellen (510) bestehenden ersten Körperbereich (700) zu schaffen, wobei $n_1 \in$ N,
   - Festlegen einer zweiten Körperzelle (520) mit einer zweiten Porosität und somit einer von der ersten Durchlässigkeit verschiedenen zweiten Durchlässigkeit für das vorgesehene Temperiermedium,
   - $n_2$ -faches Kopieren der festgelegten zweiten Körperzelle (520), um einen aus mehreren zweiten Körperzellen bestehenden zweiten Körperbereich (700) zu schaffen, wobei $n_2 \in$ N,
   - Aneinanderfügen mindestens eines ersten Körperbereichs (700) und mindestens eines zweiten Körperbereichs (700) in der zur Erzielung des herzustellenden 3-dimensionalen Körper (100) geeigneten Gruppierung, die durch die verschiedenen Porositäten der Körperzellen (510, 520) den gewünschten Fließweg des Temperiermediums in dem 3-dimensionalen Körper (100) bildet, und
   - Erstellen der Schichtdaten des dreidimensionalen Körpers (100), der aus den festgelegten Körperzellen (510, 520) besteht.

2. Verfahren nach Anspruch 1, ferner umfassend die nachfolgenden computergestützten Verfahrensschritten:

   - Festlegen einer $n_3$ -ten Körperzelle mit einer $n_3$ -ten Durchlässigkeit für das vorgesehene Temperiermedium, wobei die $n_3$ -ten Durchlässigkeit für das Temperiermedium von der ersten und zweiten Durchlässigkeit verschieden ist,
   - $n_3$ -faches Kopieren einer festgelegten $n_3$ -ten Körperzelle (510, 520), um einen aus mehreren $n_3$ -ten Körperzellen (510, 520) bestehenden $n_3$ -ten Körperbereich (700), der die $n_3$ -te Durchlässigkeit aufweist, zu schaffen, und
   - Aneinanderfügen mindestens einer ersten Körperzelle (510), mindestens einer zweiten Körperzelle (520) und mindestens einer $n_3$ -ten Körperzelle zu dem herzustellenden 3-dimensionalen Körper (100),

   wobei $n_3 \in$ N$_{ohne1,2}$.

3. Verfahren nach einem oder mehreren der voranstehenden Ansprüche, ferner umfassend die nachfolgenden computergestützten Verfahrensschritte:

   - Festlegen mindestens einer Hüllzelle (440) derart, dass diese für das vorgesehene Temperiermedium undurchlässig ist,
   - optional $n_4$ -faches Kopieren der festgelegten Hüllzelle (440), um einen für das vorgesehene Temperiermedium undurchlässigen Hüll-Körperbereich (440) zu schaffen, wobei $n_4 \in$ N, und

- Aneinanderfügen aller festgelegten Körperzellen (440, 510, 520) und der mindestens einen Hüllzelle (440) in der zur Erzielung des herzustellenden 3-dimensionalen Körpers (100) geeigneten Gruppierung, die den gewünschten Fließweg des Temperiermediums in dem 3-dimensionalen Körper (100) bildet.

4. Verfahren nach einem oder mehreren der Ansprüche 1-3, bei dem die Festlegung der Porosität einer Körperzelle (510, 520) durch mindestens eines der folgenden Gestaltungsmerkmale erfolgt: Anzahl von soliden Raumelementen (530), Form von soliden Raumelementen (530), Ausrichtung von soliden Raumelementen (530) und Material von soliden Raumelementen (530).

5. Verfahren nach Anspruch 4, bei dem das solide Raumelement (530) aus der Gruppe von Raumelementen gewählt wird, die aus länglichen Stabelementen, Kugelelementen, Würfelelementen und soliden 3D-Elementen mit beliebiger Kontur besteht.

6. Computerprogramm zur Ausführung eines Verfahrens nach einem der Ansprüche 1-5.

7. Datenträger mit einem Computerprogramm nach Anspruch 6.

8. Computersystem, auf dem ein Computerprogramm nach Anspruch 6 geladen ist.

9. FreeForm Fabrication-Anlage mit:

- einem Computersystem (1), auf dem das Computerprogramm gemäß Anspruch 6 geladen ist, und
- einer Fertigungsmaschine (6), die dazu ausgebildet ist, ein Free-Form Fabrication-Verfahren durchzuführen und die mit dem Computersystem (1) verbunden ist und von diesem die zur Herstellung des 3D-Körpers (100) notwendigen Schichtdaten erhält.

**Claims**

1. Method for providing layer data for fabricating a 3-dimensional body (100), in which a flow of a temperature control medium can be specifically generated, by means of a freeform fabrication layer building system, the method comprising at least the following computer-assisted method steps:

- establishing a first body cell (510) with a first porosity, and thereby a first established permeability for the intended temperature control medium,

- copying the established first body cell (510) $n_1$ times, in order to create a first body region (700) consisting of multiple first body cells (510), where $n_1 \in N$,
- establishing a second body cell (520) with a second porosity, and consequently a second permeability for the intended temperature control medium that is different from the first permeability,
- copying the established second body cell (520) $n_2$ times, in order to create a second body region (700) consisting of multiple second body cells, where $n_2 \in N$,
- joining together at least one first body region (700) and at least one second body region (700) in the grouping suitable for achieving the 3-dimensional body (100) to be fabricated, the grouping that forms the desired flow path of the temperature control medium in the 3-dimensional body (100) by the different porosities of the body cells (510, 520), and
- compiling the layer data of the three-dimensional body (100), which consists of the established body cells (510, 520).

2. Method according to Claim 1, further comprising the following computer-assisted method steps:

- establishing an $n_3$th body cell with an $n_3$th permeability for the intended temperature control medium, the $n_3$th permeability for the temperature control medium being different from the first and second permeabilities,
- copying an established $n_3$th body cell (510, 520) $n_3$ times, in order to create an $n_3$th body region (700) consisting of multiple $n_3$th body cells (510, 520) and having the $n_3$th permeability, and
- joining together at least one first body cell (510), at least one second body cell (520) and at least one $n_3$th body cell to form the 3-dimensional body (100) to be fabricated,

where $n_3 \in N_{without1,2}$.

3. Method according to one or more of the preceding claims, further comprising the following computer-assisted method steps:

- establishing at least one sheath cell (440) in such a way that it is impermeable to the intended temperature control medium,
- optionally copying the established sheath cell (440) $n_4$ times, in order to create a sheath body region (440) impermeable to the intended temperature control medium, where $n_4 \in N$, and
- joining together all of the established body cells (440, 510, 520) and the at least one sheath cell (440) in the grouping suitable for achieving the 3-dimensional body (100) to be fabricated, the grouping that forms the desired flow path of the temperature control medium in the 3-dimensional body (100).

4. Method according to one or more of Claims 1-3, in which establishing the porosity of a body cell (510, 520) takes place by at least one of the following configurational features: the number of solid spatial elements (530), the form of solid spatial elements (530), the alignment of solid spatial elements (530) and the material of solid spatial elements (530).

5. Method according to Claim 4, in which the solid spatial element (530) is chosen from the group of spatial elements that consists of elongated rod elements, sphere elements, cube elements and solid 3D elements of any desired contour.

6. Computer program for performing a method according to one of Claims 1-5.

7. Data carrier with a computer program according to Claim 6.

8. Computer system in which a computer program according to Claim 6 is loaded.

9. Freeform fabrication installation comprising:

   - a computer system (1), on which the computer program according to Claim 6 is loaded, and
   - a production machine (6), which is designed to carry out a freeform fabrication method and is connected to the computer system (1) and receives from the latter the layer data necessary for fabricating the 3D body (100).

**Revendications**

1. Procédé pour préparer des données de couche pour fabriquer un corps tridimensionnel (100), dans lequel un flux d'un fluide thermorégulateur peut être produit de manière ciblée au moyen d'un système multicouche de fabrication de formes libres, le procédé présentant au moins les étapes suivantes assistées par ordinateur :

   - définir une première cellule (510) de corps ayant une première porosité et de ce fait une première perméabilité déterminée pour le fluide thermorégulateur prévu,
   - copier $n_1$ fois la première cellule (510) définie pour créer une première région (700) de corps constituée de plusieurs premières cellules (510) de corps, $n_1 \in N$,

   - définir une deuxième cellule (520) de corps ayant une deuxième porosité et donc une deuxième perméabilité différente de la première perméabilité pour le fluide thermorégulateur prévu,
   - copier $n_2$ fois la deuxième cellule (520) de corps définie pour créer une deuxième région (700) de corps constituée de plusieurs deuxièmes cellules de corps, $n_2 \in N$,
   - joindre au moins une première région (700) de corps et au moins une deuxième région (700) de corps dans le groupement approprié pour obtenir le corps tridimensionnel (100) à fabriquer, lequel groupement forme par les différentes porosités des cellules (510, 520) de corps le chemin d'écoulement souhaité du fluide thermorégulateur dans le corps tridimensionnel (100), et
   - établir les données de couche du corps tridimensionnel (100) qui est constitué des cellules (510, 520) de corps définies.

2. Procédé selon la revendication 1, comprenant en outre les étapes suivantes assistées par ordinateur :

   - définir une $n_3$-ième cellule de corps ayant une $n_3$-ième porosité pour le fluide thermorégulateur prévu, la $n_3$-ième porosité pour le fluide thermorégulateur étant différente de la première et de la deuxième porosité,
   - copier $n_3$ fois une $n_3$-ième cellule (510, 520) de corps définie pour créer une $n_3$-ième région (700) de corps qui est constituée de plusieurs $n_3$-ièmes cellules (510, 520) de corps et présente la $n_3$-ième porosité, et
   - joindre au moins une première cellule (510) de corps, au moins une deuxième cellule (520) de corps et au moins une $n_3$-ième cellule de corps au corps tridimensionnel (100) à fabriquer,

   $N_3 \in N_{ohne\ 1,2}$.

3. Procédé selon une ou plusieurs des revendications précédentes, comprenant en outre les étapes suivantes assistées par ordinateur :

   - définir au moins une cellule enveloppante (440) de manière que celle-ci soit imperméable au fluide thermorégulateur prévu,
   - copier éventuellement $n_4$ fois la cellule enveloppante (440) définie pour créer une région (440) de corps enveloppante imperméable au fluide thermorégulateur, $n_4 \in N$, et
   - joindre toutes les cellules (440, 510, 520) de corps définies et ladite au moins une cellule enveloppante (440) dans le groupement approprié pour obtenir le corps tridimensionnel (100) à fabriquer, lequel groupement forme le chemin d'écoulement souhaité du fluide thermorégulateur dans le corps tridimensionnel (100).

4.  Procédé selon une ou plusieurs des revendications 1 - 3, selon lequel la détermination de la porosité d'une cellule (510, 520) de corps est effectuée par une des caractéristiques de configuration suivantes : nombre des éléments spatiaux solides (530), forme des éléments spatiaux solides (530), orientation des éléments spatiaux solides (530) et matériau des éléments spatiaux solides (530).

5.  Procédé selon la revendication 4, selon lequel l'élément spatial solide (530) est sélectionné dans le groupe d'éléments spatiaux qui est constitué d'éléments en forme de barre, d'éléments sphériques, d'éléments en forme de dé et d'éléments solides en 3D au contour quelconque.

6.  Programme d'ordinateur pour mettre en oeuvre le procédé selon l'une quelconque des revendications 1 - 5.

7.  Support de données comprenant un programme d'ordinateur selon la revendication 6.

8.  Système d'ordinateur sur lequel un programme d'ordinateur selon la revendication 6 est chargé.

9.  Installation de fabrication de formes libres comprenant :

    - un système d'ordinateur (1) sur lequel le programme d'ordinateur selon la revendication 6 est charge, et
    - une machine de fabrication (6) qui est conçue pour mettre en oeuvre un procédé de fabrication de formes libres et qui est reliée au système d'ordinateur (1) et reçoit de celui-ci les données de couche nécessaires pour la fabrication du corps tridimensionnel (100).

# FIG. 1

# FIG. 2

FIG. 3

100

120

110

130

120

FIG. 4

200

230

210

220

250

240

245

## FIG. 5

300

340
310
320
330

360          350    355

## FIG. 6

400

440
410
430
420

460          455
     450

**FIG. 7**

**FIG. 8**

# FIG. 9

# FIG. 10

## FIG. 11

# FIG. 12

# FIG. 13

# FIG. 15

# FIG. 15

# FIG. 16

# FIG. 17

# FIG. 18

980        930     980

**IN DER BESCHREIBUNG AUFGEFÜHRTE DOKUMENTE**

**In der Beschreibung aufgeführte Patentdokumente**

- DE 102006056165 A1